# EUROPEAN PATENT APPLICATION

(11) **EP 3 978 433 A1**
(43) Date of publication of application: **06.04.2022**
(21) Application number: 21198198.0
(22) Date of filing: 22.09.2021
(51) Int. Cl.: C01B 32/318, C10B 53/02, C01B 32/336, C04B 7/36, C04B 7/43, C10B 47/44

(54) **SYSTEM FOR INCLUSION OF PYROLYSIS PROCESSES IN CEMENT INTEGRAL FACTORIES**

(30) Priority: 30.09.2020 ES 202030987
(71) Applicant: Cogcem Proyectos, S.L., 04700 El Ejido (ES)
(72) Inventor: BLASCO RASERO, Jose Antonio, 04700 EL EJIDO (ALMERIA) (ES)
(74) Representative: Bartrina Diaz, José María

(57) **Abstract**

System for the inclusion of pyrolysis processes in comprehensive cement factories, based on the integration in a cement clinker manufacturing process of a high temperature and intermediate speed pyrolytic process, taking advantage of the hot gaseous currents left over from cement processes for the production of Biochar, active Biochar and the rest of the by-products obtained.

## Description

### OBJECT OF THE INVENTION

The object of this invention patent is to establish a method for the integration of pyrolysis plants of intermediate heating speed and high temperature, for the production of Biochar and other liquid and gaseous streams of materials with combustible properties or for other applications, taking advantage of the residual heat from cement processes.

The cement industry has high temperature heat sources in its processes, which can be used to achieve heating to a temperature suitable for obtaining Biochar from organic waste in processes assimilable to pyrolysis processes.

Biochar or charcoal, produced from organic waste in pyrolysis processes (evaporation of volatile elements by heating in the absence of O₂) is currently a major development as a product with properties that are interesting for agriculture, as an adsorbent of contaminants (activated Biochar) and above all as sink of CO₂. The most important variables to be able to produce a quality Biochar (and above all an activated Biochar) are to use the appropriate organic waste, to obtain an appropriate rate of heating and time of residence and, above all, to reach a maximum temperature in the product that is as high as possible with the aim of achieving an H/C ratio lower than 0.7 (ideally close to 0.4), in order to obtain a mineral product that is as stable as possible and is not degradable by microorganisms.

Additionally, during the production of Biochar in the pyrolysis processes, volatile compounds are produced with a sufficiently high calorific power so as to be able to be used in heating processes of the cement process or other connected processes that require a fuel (for example water boilers, electrical power production engines, other industrial processes). The compounds produced in the pyrolysis process can be silts or solid waste, combustible liquid effluents of varying viscosity or combustible gases. Depending on the conditions of the pyrolysis process, the production of the so-called "Wood Vinegar" used as a natural herbicide is possible.

The integration of this process in the cement industry can help to significantly reduce the contribution thereof to the generation of greenhouse gases, treating organic waste (pruning waste, non-usable straw, livestock industry waste and of the agricultural processing industry, development of the forestry industry, treatment of purines, treatment of sludge from urban sewage, organic fraction of the urban solid waste) that currently are not used and are deposited in spillways, fermenting and producing methane and other gases with a contribution to climate change that is much higher than CO₂ itself.

Lastly, as a product, Biochar has many applications and it is possible that in the coming years the development of this material could make it a very useful item across the world:
- food for cattle,
- uses in agriculture as amendment or fertilizer,
- adsorbent of polluting substances in gaseous or liquid streams,
- application for remediation of soil,
- as an addition to asphalt and cement, etc.

In all cases, the characteristics of the Biochar as a sink for CO₂ and the fuel properties of the by-products obtained in the pyrolysis process are the most relevant properties when considering production.

### BACKGROUND OF THE INVENTION

Cement factories are facilities of recognized solvency, with constantly evolving technology, particularly from the middle of the twentieth century, basically focusing on problems arising from the production of cement clinker, an element considered strategic, especially in developing countries, but also for developed countries, as the concrete structures built do not have an infinite service life and will need renovating.

In recent years, at the European level, comprehensive cement production factories have adapted to reduce costs, mainly using alternative fuels derived from waste. This adaptation has been possible thanks to the innate conditions of the cement process: high temperatures and residence times, oxidizing atmosphere, alkaline environment; as well as an intense investment program to adapt facilities and processes. However, the economic crisis has hit the sector hard, especially in Europe, where the level of infrastructure built is high, so that cement sales have fallen considerably, many of the plants installed not being necessary. The rising cost of electricity and fuels and, above all, the change in the framework of the regulation of the allocation of emission rights to try to combat the effects of climate change, call for the closure of many comprehensive cement plants, which will be installed in developing country in which the legislation is not as strict as in Europe, and where sales volumes and the price of cement provide strong economic benefits, beginning a strategy for divestment in Europe, and moving production to third countries.

The destruction of the productive fabric, due to these three combined factors: Increase in fuel and electricity prices, increase in price due to the emission of greenhouse gases, drop in the volume of cement sales; these seem to be leading the sector to the definitive closure of its facilities in Europe.

At the same time, due to social and administrative pressure, with the application of more rigorous environmental control laws, factories have had to make heavy investments to control their emissions: channelled particles (bag filters), SO₂ (spray dryer), NOx (SCNR), fugitive particles (ships, windbreak screens, belt closures, ...), continuous measurement equipment. Concern for these issues related to health and well-being cannot reduce the level of demand that Administrations must demand from the industry, so in the coming years these demands will increase.

Furthermore, the inherent characteristics of cement manufacturing processes that require the handling of pulverulent materials, and the criticisms of environmental groups against the waste recovery processes, mean that cement factories are poorly perceived among many sectors of the population, affected in one way or another by the operation of these facilities. Above all, by those who have not adapted their assets to the new social needs due to lack of profitability, which in recent years resulted in a significant drop in the level of investment needed for proper maintenance of facilities, processes, teams and human capital.

Despite everything, modern society poses additional challenges to industrial sectors:
- Significant reduction of greenhouse gas emissions to fight against climate change,
- Improvement in pollutant gas treatment systems, through transparent systems, duly explained to the public,
- Modification of the energy model: Increase in the production of electrical energy to provide service for the technological change involved in the transition from the combustion engine to the electric motor of the vehicle fleet,
- Processes for the management of generated waste,
- Safety and reliability of production systems,
- Preservation of resources through recycling policies,
- And also, production of cement for the manufacture of the concrete necessary for the maintenance and improvement of housing and infrastructures.

The cement industry has a large presence all around the world. Thus, while there are plant closures in developed countries that no longer need so much cement, these same countries demand more electrical power and produce more waste, which means that systems are needed for the production of this electricity and investments should be made in facilities for proper waste management. Moreover, in the rest of the world, many developing countries need their cities to be urbanized, which requires a large amount of cement, forcing them to create factories in which this construction element is produced in a different manner than that admissible to date, reducing emissions of greenhouse gases and other environmental pollutants to avoid climate change and the pollution of the planet.

Regarding the production of Biochar, this product has been known for many centuries under different names (charcoal, wood charcoal or vegetable charcoal). Its production was traditionally carried out in so-called "charcoal burners": the stacking of firewood from different plant species, which were covered with branches and moss, to later be heated in reducing atmospheres (carbonization) for several days, emitting a considerable amount of pollutant gases.

Charcoal from bunkers was always a material appreciated for its calorific and adsorbent properties, but it had various drawbacks such as low production efficiency due to the manual methods used, and the danger posed by methods to verify that charcoal was mature and large emissions of CO₂, CO, CH₄ and other polluting gases emitted during its production process in the old coal bunkers. All these drawbacks meant that charcoal stopped being used, especially after the generalization of fossil fuels.

Due to the climatic emergency stemming from greenhouse gas emissions, the idea of being able to confine CO₂ in stable, solid materials, in processes similar to those that occurred on our planet during the Palaeozoic in a process that led to the reduction of the high concentration of CO₂ emitted during the Precambrian, is an idea that is very attractive to reduce the current risk of reaching catastrophic levels of increase in temperature of the planet due to the increase in concentrations of CO₂ and other greenhouse gases released by man in the last 200 years.

Thus, in recent years there have been many studies regarding new uses and properties of Biochar and its derivatives products, as well as of new production processes.

Organizations such as the International Biochar Initiative or, in Europe, the European Biochar Foundation work to promote and standardize the different processes and products obtained, developing an important task of connection and coordination between the different companies and interested institutions, both from the point of view of improvement of its production and the possible uses to which this material is directed.

Among the uses and properties of Biochar and the by-products obtained from its production process, which arouse so much interest among companies, researchers and users, the following stand out:
- Soil improvement for the promotion of plant life:
   ∘ nutrient availability
   ∘ improvement of the physical properties of soils (water retention, root aeration),
   ∘ interaction with microbes,
   ∘ soil remediation: retention of toxic components,
   ∘ less need for biocides and pesticides in the fields.
- Climate change mitigation:
   ∘ lower oxidation rate (conversion of organic matter to CO₂ by microorganisms) than the biomass derived therefrom (sink of CO₂).
   ∘ Effects on the N cycle of soils: reduction of bacteriological production of N₂O.
- Organic waste management: technical solutions for the treatment of different kinds of organic waste: wood, straw, manure, sewage sludge, organic materials from municipal solid waste.
- Production of biofuels: gas and liquid products with sufficient calorific power, produced during the carbonization process.
- Use as an adsorbent (active Biochar) for the purification of water and gas pollutants, even as a detoxifying agent or slow release of active ingredients for medicines.
- Other applications: livestock feeding, improvements in the production of vegetable compost, preparation of liquid products with fungal properties, application in construction mixed with cement or asphalt, even recovering its traditional use as green fuel.

For the production of a quality Biochar and its by-products, the variables to take into account are:
- the properties of the raw material used,
- the Maximum Temperature reached in the process,
- the Residence Time,
- the Heating Speed
- and the Addition of additives.

Currently, depending on the residence time, three types of pyrolytic processes can be distinguished: fast, intermediate or slow.

### DESCRIPTION OF THE INVENTION

The idea is based on taking advantage of the hot gases left over from the cement clinker production process to use that heat in the pyrolysis reaction for the generation of Biochar and its by-products.

In order to carry out the pyrolysis process, the heat from two streams of the cement clinker production process is used:
- The exit of gases from the chlorine bypass processes taken from the first cyclones of the cement process heat exchanger (gas direction), with very high temperatures around 800-900ºC and with a very low O₂ content (around 1%).
- The exit of gases from the last cyclones of the cement process heat exchanger (gas direction), with high temperatures around 360-400ºC and with a medium O₂ content (around 6%).

The first of these gas streams exists in many cement processes with high recirculating chlorine content that must be reduced thanks to these purging facilities. The second of the defined streams is usually used to dry the raw material except for approximately 25% of the time in which the crude mill is stopped, time in which all the gases are evacuated to the atmosphere. In any case, both streams must be tempered by cooling processes before passing through filter systems to reduce the dust load and prevent emissions exceeding the limit value of particles emitted established by the legislation.

Thus we have two sources of heat from the clinker production process that can be used to raise the temperature of the organic waste to convert it into Biochar by temperature raising processes in the absence of O₂ (pyrolysis process).

In our design, Biochar is produced by a pyrolytic process using various worm screws to move the organic waste by variable speed motors to adjust the heating rate and the time residence to the conditions of the raw material. It is, therefore, an intermediate pyrolysis process comprising the following steps:
- Pre-treatment (crushing, mixing and pre-drying) and homogenization of organic waste.
- Introduction to the first worm screw for drying raw material. A material temperature of around 110ºC is reached during the appropriate residence time, adjustable thanks to the speed of the worm screw. The steam produced is sent to a refrigeration system to condense the extracted water vapor. The water obtained contains various organic compounds so that it will be necessary to purify it. In some cases, the mixture of water formed mixed with organic compounds forms a liquid with insecticidal properties known as "Wood Vinegar". The heat for this evaporation is provided by the gases from the cement process that pass through the outside of the worm screw.
- The dry material passes to the second worm screw (variable speed), in which a considerable quantity of volatile elements evaporates. At this point, the material reaches a temperature of around 250ºC which causes the volatilization of certain organic compounds. The heat for this volatilization is provided by the gases from the cement process that pass through the outside of the worm screw. The volatile substances formed are removed by a high temperature blower that moves volatile substances extracted from the second worm screw, which are conveyed to a heat exchanger and to the rest of the process (it is possible that this stream may incorporate a part of the steam produced in the first worm to increase the gas flow conveyed, as well as to improve the production of H₂ in the third worm screw thanks to the presence of water vapor). The dry and partially decomposed material passes to the third worm screw.
- The volatile substances formed in the second worm screw pass through a heat exchanger to raise the temperature of the gases to approximately 550ºC. In this exchanger, the heat is provided by the gases from the two streams of the aforementioned clinker manufacturing process that have been mixed in that exchanger. This current undergoes an additional increase in temperature thanks to a combustion process that will be explained below.
- The volatile substances that are heated in the heat exchanger to around 550ºC pass to the third worm screw, giving up its heat to the partially decomposed solid material from the second screw with which they are mixed. The cement process gases that pass outside of the third screw also provide additional heat to achieve a temperature of the solid raw material of about 500ºC, temperature at which an additional amount of the volatilized organic compounds which are channelled to any kind of thermal process for the use of this current with a considerable calorific power (for example: the cement clinker manufacturing kiln itself). The unvolatilized solid material that leaves this third screw what is known as Biochar (inert plus carbon ring compounds) with properties suitable for a number of applications. This material must be cooled for commercial use.
- A variable amount of the Biochar formed in the previous step, before being cooled, can be sent directly to a mixing chamber, which comes into direct contact with the exhaust gases of the chlorine bypass, reaching a temperature of 800ºC before its evacuation and the cooling of the process. At this temperature of 800ºC, more volatile substances with calorific value continue to evaporate, and at the same time the activation of the Biochar, which is highly appreciated as an adsorbent for polluting substances, is achieved. Activated Biochar must be cooled for commercial use.

To conclude the explanation of the process, the path followed by gases from the cement clinker manufacturing process must be described:
- In the first place, the gases that are extracted from the first cyclones (gas direction) for the purge of the chlorine Bypass, which are loaded with suspended dust, pass through a series of multicyclones to reduce the load of particles that they carry.
- Subsequently, these high-temperature and oxygen-free gases and those high in CO₂, come into contact with Biochar particles from the third worm screw for activation, reaching the high temperatures needed to convert Biochar into activated Biochar. In this process, combustible volatile gases are released.
- Next, the mixture between the chlorine Bypass gas and the evaporated volatile substances, comes into contact with the gases from the last cyclones (gas direction) of the heat exchanger of the cement clinker manufacturing process (the load of particles transporting these gases through multicyclones can also be reduced), at a lower temperature, but with an O₂ content of around 6%, which produces the combustion of the volatilized fuel gases in the Biochar activation process, which increases the temperature of mixed gases. Sometimes it may be necessary to add air from outside to increase the amount of O₂ necessary to complete the combustion of all the volatile substances produced in the Biochar activation process. In this chamber, the volatile substances that come out of the second worm screw (and if it comes from the first worm screw) are heated before entering the third worm screw to continue with the volatilization process of the organic waste (raw material).
- The gases then leave this chamber and pass through a conduit in which the three worm screws, transporting the raw material that is heating and decomposing. These gases can be used to pre-dry the organic waste used in the process.
- This whole process involves a reduction in the temperature of the gases that must be complemented with a cooling process to as low a temperature as possible (quenching) in order to prepare the gases for the purification of the particles transported in a bag filter. It is possible that it may be necessary to add some adsorbent element (wet limestone, activated carbon or the same Activated Biochar) before quenching to finish purifying the volatile elements that the gases may contain before being emitted into the atmosphere.

The described process can be optimized in cement processes in which the gas stream to heat the process is as homogeneous as possible. It could be ideal, the existence of two crude mills that alternate in time so that they always use the same amount of gases that are not necessary for drying and grinding the limestone raw material that has to be fed to the cement clinker kiln, which means that the pyrolysis process can have two hot gas currents that are stable in time.

### BRIEF DESCRIPTION OF THE DRAWINGS

To better understand what has been described in the present specification, some drawings are attached in which, only as an example, the basic concept of operation and disposal of the process is depicted, as well as of the different auxiliary elements that could be added for the optimization thereof.
In **Figure 1****,** the **diagram of an integral cement factory** with a single crude mill is depicted.

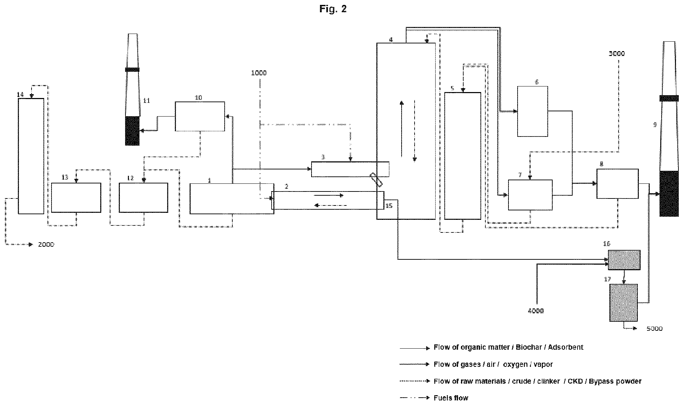

In **Figure 2****,** the **diagram of an integral cement factory** with a single crude mill is depicted, to which has been added a chlorine bypass.

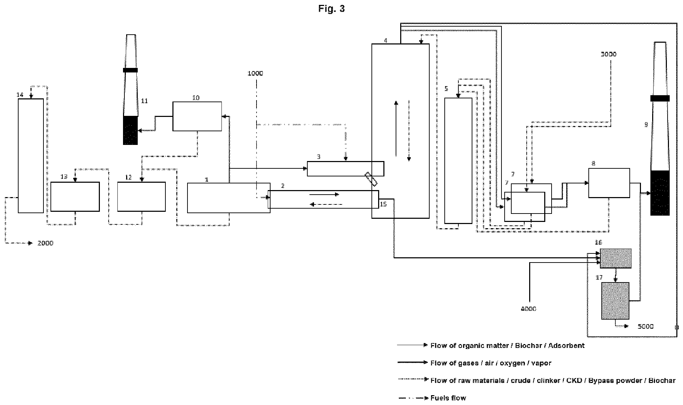

In **Figure 3****,** the **diagram of an integral cement factory** with a chlorine bypass is depicted, in which the crude mill has been replaced by two smaller mills to release one gas portion (about 25%), which have been sent to the quenching units of the chlorine bypass.

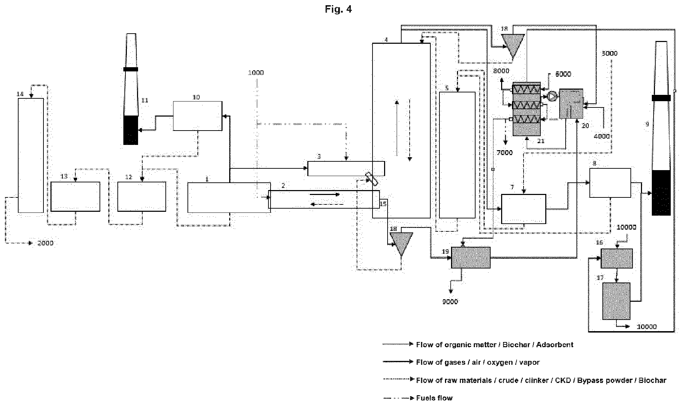

In **Figure 4****,** the **diagram of an integral cement factory** with a single crude mill and chlorine bypass and chlorine bypass is depicted, to which have been added the units necessary for the production of Biochar and its by-products through a pyrolysis process.

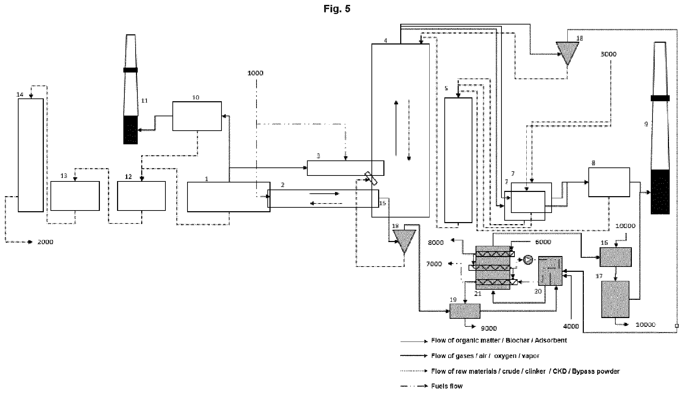

In **Figure 5****,** the **diagram of a comprehensive cement factory** with a chlorine bypass is depicted, in which the crude mill has been replaced by two smaller mills to release a portion of gas to provide greater temporal stability to the intermediate pyrolysis process using variable speed worm screws together with the necessary equipment for the production of Biochar and its by-products.

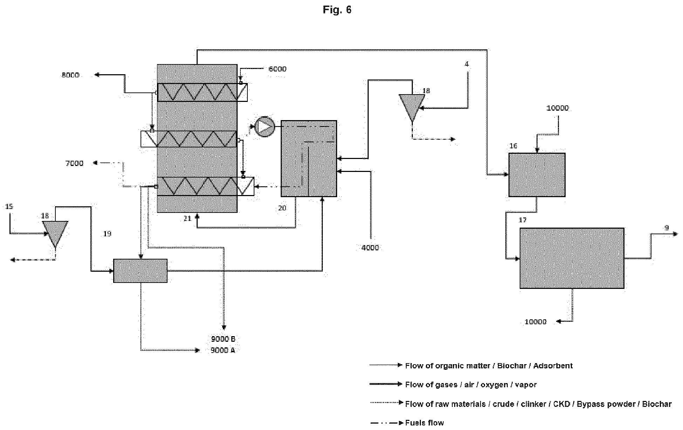

In **Figure 6** the **diagram of the pyrolysis process units** is depicted for the production of Biochar and by-products.

The gas and liquid pipes and the flow tubes, belts, elevators or other units used for the movement of solids that connect the units of the diagrams of all the figures in which the different types of cement process materials circulate are depicted, in accordance with the following code:
- The solid lines correspond to gas/air/oxygen/vapor flows.
- The dotted lines correspond to Organic Waste / Biochar / Adsorbent flows (wet limestone, active carbon, active Biochar).
- The lines consisting of lines and dots correspond to flows of solid materials: raw materials, crude, clinker, CKD dust, dust from the Bypass.
- The lines consisting of a line and two dots correspond to the fuel flow.

### DESCRIPTION OF A PREFERRED EMBODIMENT

The ways to apply this model can vary depending on the various configurations of the specific cement factory and the level of investment that is made to renovate an existing facility.

In general, it should be considered that all the cement kilns to produce clinker consist of one raw material inlet (3000), the fuel inlets (1000) and one cement outlet for its expedition (2000).

### The basic line for cement clinker production would be:

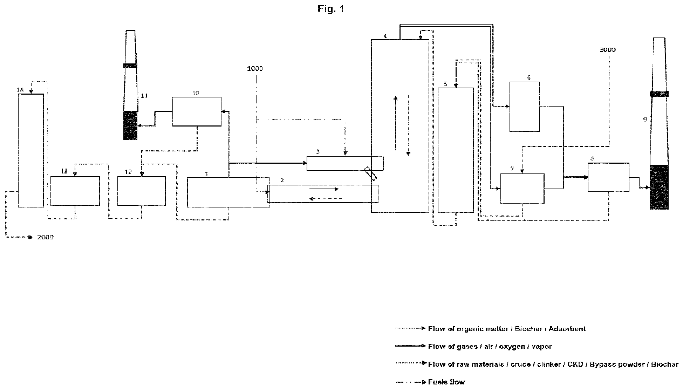

The clinker manufacturing line can be any production line commonly installed anywhere in the world. Although factories may have very varied configurations, the most usual thing would be for it to contain the elements described in Figure 1 (the model number and size of each unit installed depends on the degree of innovation of each facility):
(1) **Clinker cooler:** The hot clinker (1450ºC) which falls to this unit from of the kiln (2) is cooled with atmospheric air provided by fans. The hot gases generated in the cooling process are used as secondary air for fuel combustion (1000) used in the kiln itself (2) or the precalciner (3). The remaining air is taken to the filter (10) thanks to the depression generated in the circuit by fans properly located along the process.
(2) **Clinker kiln:** In this unit, the crude (raw material mixed and ground) from of the exchange tower (4) reaches the temperature required for clinkering reactions to take place (∼ 1450ºC). Part of the air heated produced in the cooler (1) (1100ºC) is used as secondary air for the combustion of different types of fuel fed through an appropriate existing burner.
(3) **Precalciner:** An element in which additional combustion takes place, reducing the combustion that is conducted in the kiln (2). It is possible to reduce the thermal load of the combustion of the kiln burner (less NOx), to burn another type of fuel, to reduce the loss of heat in the kiln, and stability is provided to the entire production process. The heat generated in the preheater is used in the decarbonization of limestone and in dehumidification, resulting in the binding of the streams of hot gases generated in the preheater with the oil coming from the heat exchange tower (4). For the combustion of the supplied fuel, the hot air from the cooler (1) is used as an oxidizer.
   However modern the line in which the invention is implemented, the system's efficiency can be improved, and the installation of this precalciner attached to the heat exchange tower (4) is recommended, although this element is not essential. The amount of fuel to be injected into the precalciner must be sufficient to promote the complete combustion of all the fuel in response to the amount of oxygen actually available, ensuring a residence time suitable at a high temperature for all the combustion gases for the complete destruction of complex organic compounds (T>850°C for more than 2").
(4) **Heat exchange tower:** There is a great variety of designs. Generally, it is a series of cyclones with an exchange of heat in counterflow between the descending crude dosed conveniently in the upper cyclones of the exchange tower from the crude silo (5), with the ascending heat of the combustion gases from the kiln (2) and the precalciner (3). In this unit, the temperature of the raw material is raised to approximately 900ºC, thereby causing the dehumidification and decarbonation of the limestone.
(5) **Crude silo:** To store and finish homogenizing the finely ground raw material from of the crude mill (7) for its subsequent dosing to the system through the heat exchange tower (4) according to the level of production to be fixed.
(6) **Gas conditioning tower:** Unit needed to lower the temperature of exit gases from the heat exchange tower (4), prior to passing to the filter (8) in the event that the crude mill (7) is stopped.
(7) **Crude mill:** Unit needed for mixing, drying and grinding the different types of raw materials (3000) which are joined to form a fine material or crude with the composition required to be stored in the crude silo (5) prior to being fed to the rest of the process.
(8) **End filter of the line of the kiln - crude mill system:** Filter to remove particles that accompany the stream of outlet gases from of the gas conditioning tower (6) or the crude mill (7). The fine particles captured, called CKD, are typically stored in the crude silo (5), although it is also possible to send them to the cement mill (13).
(9) **Chimney:** To emit and diffuse the outlet gases from the combustion process after the particles are eliminated by the filter (8).
(10) **Filter end of the line in the clinker cooling process:** Filter to remove particles that accompany the stream of outlet air from the clinker cooler (1) that has not been used as secondary air in the kiln (2) or tertiary in the precalciner (3). The fine particles captured are sent to the clinker warehouse (12). The filter can include one air cooling system to lower the temperature of the air from the clinker cooler (1) with the aim of protecting the filter sleeves. At the outlet of this filter, there is a fan that pulls the gases to maintain the pressure in the head of the kiln at about 1 atm.
(11) **Chimney:** To emit and diffuse the surplus outlet air from the clinker cooling process (1), which passes through the end filter line of the clinker cooling process (10).
(12) **Clinker warehouse:** Storage of the clinker formed in the kiln (2) after being cooled in the clinker cooler (1), as well as the fine clinker collected in the filter (10).
(13) **Cement mill:** Unit necessary to grind the clinker accumulated in the clinker warehouse (12) with gypsum and other materials (fly ash, slag from the high kiln, CKD, etc.) to form the different types of cements (2000) that are produced in the plant.
(14) **Silos, baggers and other expedition systems:** To store the cement produced in the cement mill (13) in various formats until their sale.

At this basic configuration, in installations with chlorine problems, the chlorine bypass is added, consisting of a gas extraction in the first cyclone of the heat exchange tower (gas direction) (4). That line is comprised of several elements:
(15) **Hot gas extraction point:** At the inlet of the heat exchange tower (gas direction) (4) near the clinker kiln (2), an area with a high concentration of chlorine gas, being the ideal point to extract gases in order to purge the system of the presence of chlorine, an element in which the process is enriched due to recirculation phenomena, and which ends up causing sticking problems in the heat exchange tower (4).
(16) **Quenching:** Cooling unit of the very hot (900ºC) and usually very rich in chlorine gases extracted from the process at the extraction point of hot gases (15). For the cooling of these gases, ambient air is used (4000).
(17) **Chlorine bypass filter:** Filter to remove particles rich in chlorine that accompany the stream of gases from the quenching outlet (16). At the outlet of this filter, there is a fan that pulls the gases. The fine particles captured, called Bypass powder (5000), are sent to the spillway, although there are other options that can be applied to the treatment and integration in the ecosystem. The quenching (16) and the filter (17) are not necessary for the clinker production processes, although, due to the large amount of fuel derived from waste with a high chlorine content which are used in order to avoid chlorine recirculation problems (bondings and stops), it is a very useful element, which will be increasingly necessary for their installation, as it is a very effective solution against bondings and stops.

This cement clinker production system can undergo the improvements foreseen in this document, for which reason its recognition as invention patent is requested.

### Pyrolysis units for the production of Biochar and Active Biochar and their by-products:

The following changes will be made to the facility defined by the presence of the chlorine bypass:
- The gas conditioning tower is cancelled (6).
- The crude mill is replaced by two crude mills (7) of the same production capacity as the supply of oil from the kiln. This generates a stable stream of excess hot gases at the outlet of the heat exchange tower (gas direction) (4), which is used in the pyrolysis process.

The following modifications must be made to this installation:
(18) **Multicyclone:** High-speed cyclones for the separation of particles from the stream of hot gases both from the Chlorine bypass and from the last cyclones of the heat exchanger (gas direction) (4) (yield of separation 80 - 90%).
(19) **Chamber for the activation of Biochar:** Chamber for the volatilization and activation of the Biochar produced in the pyrolysis reactor (21). The Biochar comes into direct contact with the hot gases from the hot gas extraction point (15). The active Biochar (9000 A) exits the chamber by means of a worm screw and is cooled before it is placed on the market.
(20) **Combustion and heat exchange chamber:** Union between the gases from the Biochar activation chamber (19) with the gases from the last cyclones of the heat exchanger (gas direction) (4). The volatile substances produced in the Biochar activation chamber (19) come into contact with the O₂ of the gases from the last cyclones of the heat exchanger (gas direction) (4), producing a combustion that raises the temperature of the mixture. In the event that the amount of O₂ is not sufficient to achieve complete combustion of all the volatile substances, air from outside (4000) can be introduced. In this chamber, there is a coil in which the volatile substances extracted from the first and second worm screw of the pyrolysis reactor circulates to raise its temperature prior to introduction into the third worm screw.
(21) **Pyrolysis reactor:** Comprising three worm screws driven by variable speed motors:
   - First worm screw: The pre-treated organic waste (6000) that is inserted into this worm screw reaches approximately a temperature around 130ºC through gases of the cement clinkerization process passing through the outside of the screw, giving rise to the drying and vaporization of the water that it still contains (8000).
   - Second worm screw: The solid material dried in the first worm screw reaches a temperature of approximately 250ºC thanks to the gases from the cement clinkerization process that pass through the outside of the screw, thereby achieving a first decomposition of the organic waste, forming different types of combustible volatile gases (7000).
   - Third worm screw: The solid material, dried and partially decomposed in the second worm screw, reaches a temperature of approximately 500ºC thanks to the gases from the cement clinkerization process that pass through the outside of the screw and to the volatile gases heated in the combustion and heat exchange chamber (20), thereby achieving a significant decomposition of organic waste, forming different types of combustible volatile gases (7000) and Biochar (9000 B).
This whole system has a fan or other equivalent system to move the gaseous elements formed in the first and second screw of the pyrolysis reactor before passing through the combustion and heat exchange chamber (20) and being introduced into the third worm screw, where it will continue volatilizing the organic waste. The hot gases that come out of the combustion and heat exchange chamber (20) are used to externally heat the three worm screws that transport the organic waste, achieving the drying and volatilization of said organic matter and the production of Biochar. It is important to emphasize that, inside of the third worm screw, there is a passage of hot gases produced in the first and second worm screw of the pyrolysis reactor heated in the combustion and heat exchange chamber (20), there being established close contact between hot gases and raw material.

The hot gases at the outlet of the pyrolysis reactor must be cooled in a quenching system (16) that is less demanding than that used for traditional chlorine bypass systems, it is even possible that they can be used for the pre-drying of organic waste. It is possible to introduce some type of solid adsorbent (10000) (wet limestone, active carbon, active Biochar) prior to the quenching system (16) to achieve the adsorption and purification of volatile pollutants transported by this current. The solid elements carried by the gaseous stream are separated from it in a bag filter (17) similar to the chlorine bypass filter.

## Claims

1. System for the inclusion of pyrolysis processes in comprehensive cement factories **characterized by**:
- Installation of two crude mills (7) each with a production level similar to the amount of crude needed to provide an additional source of hot gases for the pyrolysis process.
- Elimination of the particles from the chlorine bypass and from the remaining gas stream of the last cyclones (gas direction) of the heat exchange tower (4), which is not used in the crude mill (7) by high-efficiency multicyclones (18).
- Conduction of said currents to a pyrolytic system for heating in the absence of O₂ from different types of organic waste. The pyrolytic system has a Biochar activation chamber (19), followed by a combustion and heat exchange Chamber (20) and a pyrolysis reactor (21).

2. System for the inclusion of pyrolysis processes in comprehensive cement factories, adapted to clinker manufacturing processes with a single crude mill, according to claim 1 **characterized by**:
- Elimination of the chlorine bypass particles and the gases of the last cyclones (gas direction) of the heat exchange tower (4) that is not used in the crude mill (7) that is stopped, by means of high-efficiency multicyclones (18).
- Replace the gas conditioning tower (6) with the pyrolytic system that has a Biochar activation chamber (19), followed by a combustion and heat exchange chamber (20) and a pyrolysis reactor (21).
In this case, when the crude mill (7) is in operation, the pyrolysis system does not have the gases from the last cyclones (gas direction) of the heat exchange tower (4), so it has to adjust its production to the available heat and has to use outside air for the combustion of the volatile substances produced in the Biochar activation Chamber (19).
